(19) Europäisches Patentamt / European Patent Office / Office européen des brevets

(11) **EP 3 382 922 B1**

(12) **EUROPEAN PATENT SPECIFICATION**

(45) Date of publication and mention
of the grant of the patent:
**13.11.2019 Bulletin 2019/46**

(51) Int Cl.:
*H04L 1/00* *(2006.01)*       *H04J 11/00* *(2006.01)*
*H04L 5/00* *(2006.01)*       *H04L 27/34* *(2006.01)*

(21) Application number: **17164111.1**

(22) Date of filing: **31.03.2017**

(54) **LAYERED DIVISION MULTIPLEXING WITH UP-SAMPLED UPPER LAYER AND DEDICATED INTERLEAVING STAGES**

GESCHICHTETES DIVISIONS-MULTIPLEXING MIT ABTASTRATENERHÖHTER OBERER SCHICHT UND DEDIZIERTEN VERSCHACHTELUNGSSTUFEN

MULTIPLEXAGE PAR RÉPARTITION EN COUCHES AYANT UNE COUCHE SUPÉRIEURE CONFORME À L'ÉCHANTILLON ET ÉTAPES D'ENTRELACEMENT DÉDIÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.10.2018 Bulletin 2018/40**

(73) Proprietor: **Panasonic Intellectual Property Corporation of America**
**Torrance, CA 90503 (US)**

(72) Inventor: **KLENNER, Peter**
**63225 Langen (DE)**

(74) Representative: **Grünecker Patent- und Rechtsanwälte PartG mbB**
**Leopoldstraße 4**
**80802 München (DE)**

(56) References cited:
**WO-A1-2011/068505       US-A1- 2016 294 598**

• **ZHANG LIANG ET AL:
"Layered-Division-Multiplexing: Theory and Practice", IEEE TRANSACTIONS ON BROADCASTING, IEEE SERVICE CENTER, PISCATAWAY, NJ, US, vol. 62, no. 1, 1 March 2016 (2016-03-01), pages 216-232, XP011608943, ISSN: 0018-9316, DOI: 10.1109/TBC.2015.2505408 [retrieved on 2016-03-04]**

**Description**

TECHNICAL FIELD

The present invention relates to the field of digital communications in the context of broadcasting digital data, and in particular to a novel multiplexing scheme for delivering different services to stationary and mobile users.

BACKGROUND OF THE INVENTION

Multiplexing multiple signals into a compound signal is a common method in data communications to share a single medium. Traditionally, data carrying different services are multiplexed in time or frequency. These methods are called Time-Division-Multiplex (TDM) and Frequency-Division-Multiplex (FDM). Real-world applications for TDM and FDM can be found in DVB-T2, in which multiple so-called PLPs (Physical Layer Pipes), each characterized by their own modulation and time interleaver, are sharing a certain frequency band in dedicated time slots, and the Japanese ISDB-T standard with the prominent One-Seg system, in which data is carried in banded segments which are strictly separated in frequency domain thus allowing for power-saving partial reception of individual segments.

It has been long since known that FDM and TDM are not the most efficient methods to share a medium. Their benefit lays more with the ease of implementation. From the article "Cooperative broadcasting" by P. P. Bergmans and T. M. Cover (IEEE Trans. Inf. Theory, vol. 20, no. 3, pp. 317-324, May 1974), for instance, it is known that the *superposition* of different services increases the capacity over either TDM or FDM. Only recently, this form of multiplexing has found its way into a current standard, namely ATSC 3.0, where it is called Layered-Division-Multiplexing (LDM); cf. the article "Low Complexity Layered Division Multiplexing for ATSC 3.0," by S. I. Park, et.al. (IEEE Transactions on Broadcasting, vol. 62, no. 1, pp. 233-243, March 2016).

Intuitively, the edge of LDM over TDM/FDM in capacity is obtained due to the simultaneous transmission of more than one service without pausing in either time domain or frequency domain. In practice, however, LDM entails higher receiver complexity as well as constraints in the transmission system design. A particular constraint of the legacy LDM-system adopted by ATSC 3.0 is that the upper and lower layer implicitly use the same FFT length. Hence, a compromise must be found for the FFT length, if stationary and mobile receivers are to be served simultaneously. In co-pending EP application No. 16 195 317.9, this problem is addressed by up-sampling (zero-padding) the upper layer - which provides data to mobile receivers - to affect a larger subcarrier-spacing and thereby increase the robustness against Doppler spread.

Now the following caveat can be observed: After the superposition of the upper and lower layer the compound signal passes through a time interleaving stage and a frequency interleaving stage, which have the undesired effect to partially revoke the virtually increased subcarrier-spacing of the upper layer. While in principle time interleavers, e.g., row-column block interleavers, exist for which constant subcarrier spacing could be maintained even after interleaving, this is no longer true for a frequency interleaver which has the characteristic of a pseudo-random permutation.

On account of the interleaving the subcarrier spacing of the upper-layer will no longer be constant, i.e., some subcarriers will be closer to each other and others will be farther away. As a net effect, what can be observed is a sub-carrier spacing which is virtually enlarged on average. This is to say that the robustness against Doppler becomes higher with the up-sampling mechanism but applying a conventional interleaving technique reduces this robustness to some extent.

Reference WO 2011/068505 (A1) discloses a technique for providing multiple data streams in a single physical layer pipe with multiple levels of robustness. Partial data streams are included in the same physical layer pipe over a communications channel in accordance with different modulation schemes and code rates. Consequently, a receiver can extract the first and second partial data streams from the same physical layer pipe of a signal received on the communications channels based on the associated signalling information, where each partial data stream may be associated with a physical layer pipe component. Before transmission, cells from different physical layer pipe components are multiplexed to form a combined data stream. The ordering of cells within the combined data stream may then be permuted so that different mappings of the physical layer pipe components to carriers in many consecutive orthogonal frequency division multiplexing symbols may be insured. Signalling information may included in the transmitted data stream so that a receiver can extract information from the physical layer pipe components in accordance with the related modulation schemes and code rates of each physical layer pipe component.

The article "Layered-Division-Multiplexing: Theory and Practice" by Liang Zhang et al., IEEE Transactions on Broadcasting, vol. 62, March 2016, provides an overview of layered-division-multiplexing, in particular in the context of the ATSC 3.0 system developed for the next generation digital TV standard, and describe advantages of LDM over the traditional TDM/FDM systems.

Reference US 2016/294598 (A1) discloses a broadcast signal receiver which includes a synchronization and demodulation unit configured to perform signal detection and OFDM demodulation on a received signal, a frame parser configured to parse the signal frame of the received signal, a time deinterleaving unit configured to deinterleave LDM data, a first demapping/decoding unit configured to obtain the data of a core layer by demapping and FEC-decoding the LDM data, an interference removal unit configured to remove the core layer data from the LDM data and to output the data of an enhanced layer, and a second demapping/decoding unit configured to demap and FEC-decode the enhanced layer data.

## SUMMARY OF THE INVENTION

In view of the above problems, it is an aim of the present invention to provide an improved interleaving structure that can achieve high robustness against Doppler, in particular in conjunction with an LDM-combiner that employs upper layer up-sampling.

This is achieved by the features as set forth in the independent claims. Preferred embodiments are the subject matter of dependent claims.

In the context of layered division multiplexing with upper-layer up-sampling, it is the particular approach of the present invention to provide separate interleaving stages for LDM compound cells carrying cells of more than one layer and for LDM compound cells carrying cells of only one layer. In this manner, time- and frequency interleaving can be performed on an LDM compound signal while maintaining subcarrier spacing for compound cells carrying cells of more than one layer.

In the following, LDM compound cells carrying cells from more than one layer will be referred to as superimposed cells whereas LDM compound cells carrying cells from only one layer will be referred to as non-superimposed cells.

According to a first aspect of the present invention, a method for transmitting digital data is provided. The method comprises the steps of generating a first modulated signal by modulating digital data of a first service; generating a second modulated signal by modulating digital data of a second service; up-sampling the first modulated signal by inserting (M-1) zeroes between every two consecutive samples of the first modulated signal, M being a positive integer greater than 1; generating a compound signal by adding the up-sampled signal and the second modulated signal; interleaving the compound signal by applying a permutation to a block of consecutive samples of the compound signal, said permutation being adapted such that a subset consisting of every M-th sample of the block is mapped onto itself, said subset of every M-th sample consisting of samples of the compound signal that are the sum of a sample of the first modulated signal and a sample of the second modulated signal; and transmitting the interleaved compound signal.

Hence, the interleaving is performed such that the set of superimposed cells, i.e. the subset of samples of the compound signal that are the sum of a sample of the first modulated signal (prior to up-sampling) and a sample of the second modulated signal, is invariant under the permutation applied. This implies that the complementary set, i.e., the set of non-superimposed cells, is also invariant under the permutation applied. In other words, superimposed cells are only mapped onto superimposed cells, and non-superimposed cells are only mapped onto non-superimposed cells, or in still other words, superimposed cells and non-superimposed cells are interleaved independently. In this manner, the subcarrier spacing (i.e., the spectral distance) between superimposed cells is not altered by the interleaving stage.

The interleaving step further comprises demultiplexing the compound signal into a first sequence of samples consisting of every M-th sample of the compound signal and into a second sequence of samples consisting of the samples of the compound signal that are not part of the first sequence of samples, the first sequence of samples consisting of the samples that are the sum of a sample of the first modulated signal and a sample of the second modulated signal; applying a first interleaving process to the first sequence of samples; applying a second interleaving process to the second sequence of samples; and re-multiplexing the interleaved first sequence of samples and the interleaved second sequence of samples to obtain the interleaved compound signal. In this manner, a permutation with the desired property of mapping superimposed cells only onto superimposed cells can be implemented in a straightforward manner.

Preferably, the first and/or the second interleaving process comprise a row-column interleaving process. Alternatively or additionally, the first and/or the second interleaving process comprise a pseudo-random interleaving process. Pseudo-random and row-column interleaving may relate to frequency and time interleaving, respectively.

In a preferred embodiment, parameters of the first and/or the second interleaving process are signaled within an L1-signaling part of a respective data frame. In this manner, interleaving parameters may be freely selected to suit a particular propagation scenario.

A preferred embodiment further comprises the step of dividing the compound signal into frames of a predefined length, wherein data of each frame is transmitted simultaneously by means of orthogonal frequency division multiplexing, OFDM. OFDM is the preferred method for transmitting digital data over a broadband communication channel and used in many digital broadcasting and communication standards, incl. DVB-T2 and ATSC 3.0.

Preferably, data of the first service is transmitted on every M-th OFDM subcarrier only. This reduces ICI for the first layer data on time-varying channels and allows at the same time long OFDM symbols for the second layer data. Mobile devices may thus receive the first service with high reliability, whereas stationary devices may additionally receive the second service at a high data rate.

According to a second aspect of the present invention, a method for receiving digital data is provided. Said method comprises the steps of receiving a compound signal; demultiplexing a first sequence of samples from the received compound signal, said first sequence of samples consisting of every M-th sample of the compound signal, M being a positive integer greater than 1; applying a first de-interleaving process to the first sequence of samples; and retrieving digital data of a first service by demodulating the de-interleaved first sequence of samples.

The method further comprises the steps of demultiplexing a second sequence of samples from the received compound signal, said second sequence of samples consisting of samples of the compound signal that are not part of the first sequence of samples; applying a second de-interleaving process to the second sequence of samples; re-multiplexing the de-interleaved first sequence of samples and the de-interleaved second sequence of samples to obtain a de-interleaved compound signal; generating a re-modulated signal by modulating the retrieved digital data of the first service; up-sampling the re-modulated signal by the factor of M; generating a difference signal by subtracting the up-sampled signal from the deinterleaved compound signal; and retrieving digital data of a second service by demodulating the difference signal.

In a preferred embodiment, the method further comprises the step of obtaining interleaving parameter information from an L1-signaling field in a frame header, wherein at least one of the first de-interleaving process and the second de-interleaving process is applied to the respective sequence of samples in accordance with the obtained interleaving parameter information. In this manner, interleaving parameters may be freely selected to suit a particular propagation scenario.

In a preferred embodiment, the compound signal is received by decoding a sequence of OFDM symbols. Moreover, the down-sampling step may keep every M-th OFDM subcarrier only, thereby achieving a reduction of ICI on rapidly time-varying channels.

According to further aspects of the invention, a corresponding transmitter and receiver are provided.

BRIEF DESCRIPTION OF THE DRAWINGS

The above and other objects and features of the present invention will become more apparent from the following description and preferred embodiments given in conjunction with the accompanying drawings, in which:

Fig. 1 is a block diagram which illustrates a conventional technique for constellation superposition for two-layer LDM according to ATSC 3.0;

Fig. 2A is a spectrum diagram which illustrates strictly orthogonal subcarriers as received over a static channel;

Fig. 2B is a spectrum diagram which illustrates intercarrier-interference among subcarriers received over a rapidly time-varying channel;

Fig. 3 is a spectrum diagram which illustrates reduced intercarrier-interferences in a situation where only every other subcarrier is modulated;

Fig. 4A is a spectrum diagram which illustrates subcarriers in a situation where LDM and OFDM are used on a static channel;

Fig. 4B is a spectrum diagram which illustrates subcarriers in a situation where LDM and OFDM are used on a rapidly time varying channel;

Fig. 5 is a block diagram which illustrates a technique for constellation superposition and interleaving for two-layer LDM according to an embodiment of the present invention;

Fig. 6A is a spectrum diagram which illustrates transmitted OFDM symbols with an LDM compound signal according to an embodiment of the present invention;

Fig. 6B is a spectrum diagram which illustrates OFDM symbols with an LDM compound signal received over a rapidly time-varying channel, according to an embodiment of the present invention;

Fig. 7A is a schematic representation of a sequence of LDM compound cells output by an LDM combiner with upper-layer up-sampling and M=3;

Fig. 7B is a schematic representation of the interleaving stage operating on the cell sequence of Fig. 7A;

Fig. 8A    is a schematic illustration of one core PLP and one enhanced PLP from a single LDM-group;

Fig. 8B    is a schematic illustration of one core PLP and one enhanced PLP in a first LDM-group 0, and a single PLP in a second LDM-group 1;

Fig. 8C    is a schematic illustration of three PLPs on the core layer and a single PLP on the enhanced layer, which yield three LDM-groups;

Fig. 8D    is a schematic illustration of a single PLP on the core layer and three PLPs on the enhanced layer, which yield a single LDM-group;

Fig. 8E    is a schematic illustration of two PLPs on core and enhanced layer, which yield two LDM-groups, with the fourth PLP (plp_id_3) being shared by two LDM-groups;

Fig. 9    is a schematic illustration of a time interleaver layout for the upper (Fig. 9B) and the lower (Fig. 9B) layer and a single PLP on the lower layer;

Fig. 10    is a schematic illustration of two enhanced PLPs (Fig. 10A and Fig. 10B) which are passed through the lower layer time-interleaver (Fig. 10C);

Fig. 11    is a schematic illustration of applying the frequency interleaver in chunks of $N_{data}$ cells to the time-interleaver output of in total K cells;

Fig. 12A    is a schematic block diagram of a receiver for the upper layer according to an embodiment of the present invention; and

Fig. 12B    is a schematic block diagram of a SIC-Receiver for the lower layer according to an embodiment of the present invention.

## DETAILED DESCRIPTION

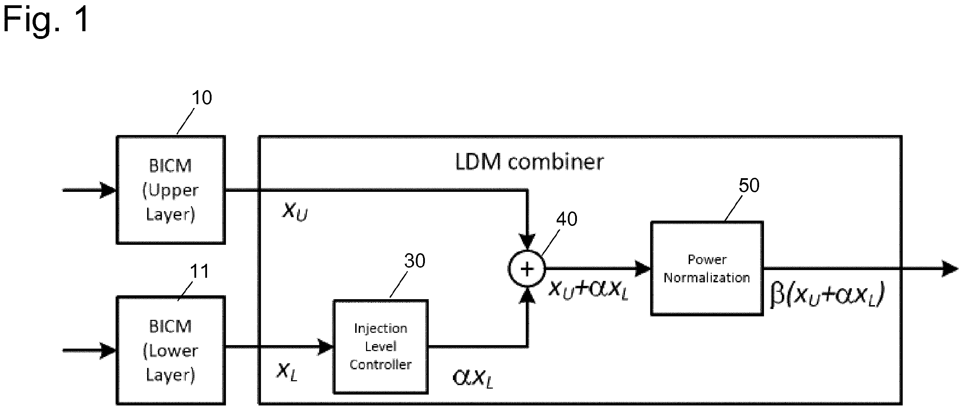

Fig. 1 illustrates the general concept of LDM for two layers, which are called upper and lower layer. In principle, of course, more than two layers are conceivable. Both layers can carry one or more physical layer pipes (PLPs). The upper layer carries a low-rate service $x_U$ aimed at mobile reception, while the lower layer carries a high-rate service $x_L$ aimed at stationary reception. An injection level controller provides a scaling factor $\alpha \leq 1$ which lowers the power of the lower layer, followed by a superposition of the two layers yielding the non-normalized signal $x_U + \alpha\, x_L$. The compound signal is subsequently normalized to unit power via an appropriate scaling factor $\beta$.

ATSC 3.0, a new digital terrestrial television (DTT) system and the first to implement LDM, is based on orthogonal frequency division multiplexing (OFDM) and bit-interleaved coded modulation (BICM). In Fig. 1, there is thus a first BICM unit (10) for the digital data of the upper layer and a second BICM unit (11) for the digital data of the lower layer. Each BICM unit (10, 11) includes an encoder (not shown) for encoding the input data with an error correcting code, a bit interleaver (not shown) for increasing the resilience to burst errors, and a symbol mapper (not shown) for mapping the coded and interleaved bit sequence into a base-band sequence of complex digital symbols or cells. Here, the sequence of symbols is also referred to as a modulated signal. Additionally, the term FEC-block is frequently used to refer to a set of cells carrying the coded, bit-interleaved and modulated bits of a single FEC-codeword.

The modulated signal of the lower layer is fed through the injection level controller (30), which applies a scaling by factor $\alpha \leq 1$. The scaled lower layer signal and the (unscaled) upper layer signal are then combined by means of a signal adder (40), which performs algebraic addition on a cell-by-cell basis. The result of this operation may be scaled once more in order to normalize the power of the compound signal (power normalization unit 50). The process of controlling the injection level and the process of normalizing the power of the compound signal may also be combined into a single step of computing a suitably weighted sum of the two signals, or performed in any other suitable manner.

It is noted that in ATSC 3.0, the upper layer is called core layer, and the lower layer enhanced layer. Other than that layered division multiplexing was specified as depicted in Figure 1.

The corresponding receiver operation is understood such that a mobile receiver, which is interested in the upper layer only, also detects the upper layer only. A stationary receiver interested in the lower layer is required to perform successive interference cancellation, i.e., the upper layer is detected first. Assuming that the upper layer is detected successfully, it is then re-modulated and the re-modulated cells are subtracted from the received cells in order to detect eventually the lower layer.

According to Figure 1, each cell of the upper layer is paired with a corresponding cell from the lower layer resulting in a compound signal which is subsequently passed on to the interleaving stages, the framing and finally OFDM itself.

Here, the first compromise can be observed: in practice, time interleaving and frequency interleaving are applied to the compound signal as in ATSC 3.0 in order to reduce receiver complexity, although different interleaving stages might be desirable for mobile and stationary signals. On the other hand, it is conceivable that both signals employ dedicated interleaving stages; this leads, however, to increased receiver complexity on account of additional interleaving operations during the successive interference cancellation.

The second compromise follows from the carriage of the compound signal on a single OFDM signal, i.e., both layers implicitly use the same FFT length. Here, a clear design conflict comes to light: the mobile upper layer would benefit from a short FFT to be resilient against Doppler spread, while the stationary lower layer would benefit from a long FFT to minimize the loss in terms of the guard interval. In practice, a middle ground is chosen in the form of an 8k or 16k FFT rather than a 32k FFT.

Orthogonal Frequency Division Multiplexing is an established method to transmit data over a wide bandwidth. Multipath effects are elegantly coped with by transmitting data in orthogonal subcarriers, and by additionally expanding the OFDM symbol duration beyond the maximum expected delay spread of the channel using a cyclic prefix which simplifies the equalization step at the receiver.

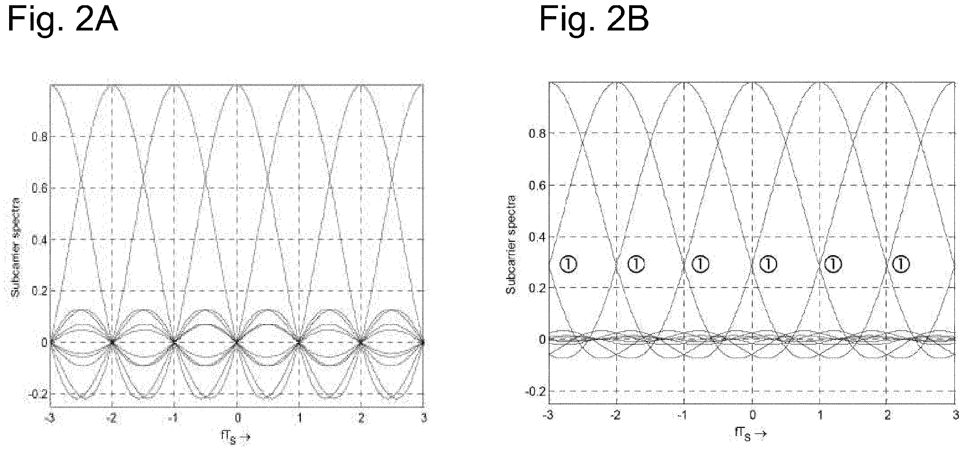

Fig. 2A is a spectrum diagram which illustrates strictly orthogonal subcarriers as received over a static channel. The subcarrier spectra exhibit their typical sinc-type behavior and at integer multiples of the normalized frequency $f\,T_S$ only a single subcarrier is non-zero, while all neighboring subcarriers are passing through zero. Here, f Ts denotes the frequency f normalized to the subcarrier spacing 1/Ts with Ts denoting the OFDM symbol duration.

However, the prolonged symbol duration makes OFDM vulnerable to time-varying changes of the channel. In particular, the orthogonality of the subcarriers is lost if the channel impulse response changes during an OFDM symbol. This is a straightforward consequence of the Fourier transformation and its correspondences between time and frequency domain. As a consequence of the lost subcarrier orthogonality in frequency domain after the FFT, intercarrier-interference (ICI) may occur, which diminishes the carrier-to-interference-and-noise-power CINR and the more so the faster the receiver is moving.

Fig. 2B is a spectrum diagram which illustrates intercarrier-interference among subcarriers received over a rapidly time-varying channel. As can be seen, the subcarrier spectra are widened on account of a time-varying channel and thus at any given subcarriers its neighboring subcarriers are now non-zero (indicated by ①) and interfere with each other. This should be compared to the strictly orthogonal conditions in Figure 2A without ICI.

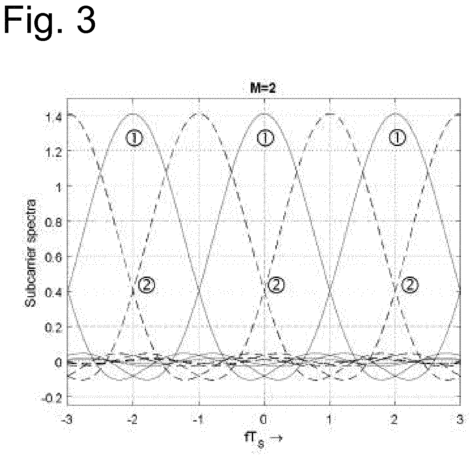

Fig. 3 is a spectrum diagram which illustrates reduced intercarrier-interferences in a situation where only every other subcarrier is modulated (solid lines, ①). The modulated subcarriers are boosted by a value of $\gamma = \mathrm{sqrt}(2) \approx 1.414$ to yield unit power, and the unmodulated subcarriers (dashed lines) are shown only for reference and are not actually transmitted. It is easily observed that the largest contributing interference (②) from the two neighboring subcarriers is suppressed, and the CINR at the actively modulated subcarriers (①) is increased.

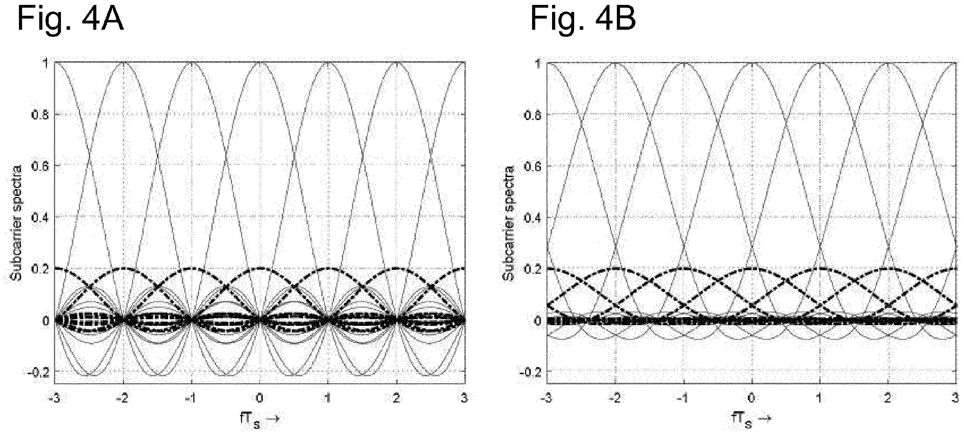

Figure 4A shows the relationship of all subcarriers in a situation where LDM is performed according to Figure 1 and the compound signal is modulated onto an OFDM symbol. The upper layer is shown with solid lines, the lower layer after lowering its power to its chosen injection level with dash-dotted lines. Figure 4B depicts the ICI situation in case of rapidly time-varying conditions, i.e., ICI is caused by both upper and lower layer.

Hence, in principle, LDM can serve different types of receiver, e.g. mobile and stationary, simultaneously in an information-theoretically optimal way. However, when LDM is paired with OFDM to cope with multipath effects, a single FFT length is implicitly assigned to both layers, although the mobile layer would preferably employ a short FFT for Doppler resilience and the stationary layer a long FFT for high spectral efficiency.

Co-pending EP application No. 16 195 317.9 proposes up-sampling the upper layer to increase its subcarrier spacing. However, interleaving in time and frequency is employed conventionally before OFDM modulation, which partially revokes the increased subcarrier spacing of the upper layer. In the following, an interleaving stage will be disclosed that is specifically adapted to the LDM combiner with upper-layer up-sampling in order to maintain (a constantly increased) subcarrier spacing of superimposed cells on the upper layer.

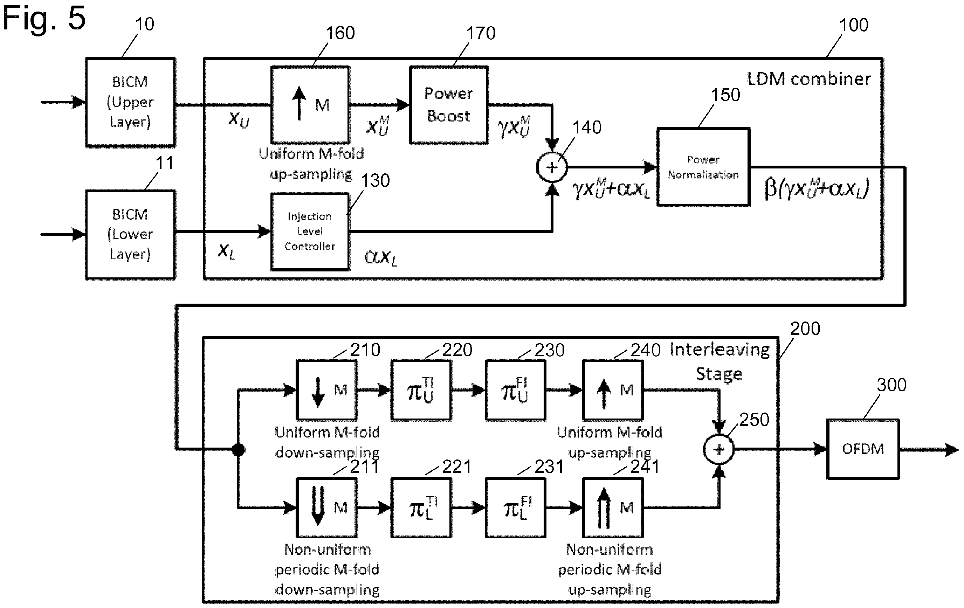

Fig. 5 is a block diagram which illustrates a technique for constellation superposition and interleaving for two-layer LDM according to an embodiment of the present invention. The configuration of Fig. 5 resolves the conflict between long FFT length and Doppler resilience and provides interleaving in time and frequency, such that constant subcarrier spacing is maintained. The solution consists of two main components, the LDM combiner, which is a modified version of the generic LDM combiner shown in Figure 1, and the interleaving stage.

The configuration of Fig. 5 comprises two BICM units (10, 11) for each of the upper layer data and the lower layer data, respectively. Each BICM unit (10, 11) includes an encoder (not shown) for encoding the input data with an error correcting code, a bit interleaver (not shown) for increasing the resilience to burst errors, and a cell mapper (not shown) for mapping the coded and interleaved bit sequence into a base-band sequence of complex digital symbols.

The modulated signal of the upper layer and the modulated signal of the lower layer are then combined in LDM combiner (100) into a compound signal.

The LDM combiner (100) of Fig. 5 is similar to the generic LDM combiner shown in Figure 1, wherein like elements are identified by like reference numerals, a detailed description thereof will be omitted. The configuration of the LDM combiner (100) of Fig. 5 differs from the generic LDM combiner of Fig. 1 in that the LDM combiner (100) further comprises an up-sampling unit (160) and a power booster (170) in the upper layer branch. The up-sampling unit (160) performs M-fold up-sampling on its input signal, which is achieved by inserting (M-1) zeros between every two consecutive samples $x_U$ at its input, thus yielding the up-sampled signal $x_U^M$. The insertion of zeroes implies a reduction of power. In order to compensate the power reduction, a power booster (170) is provided which boosts the signal's power by a factor $\gamma$ which equals the square root of the up-sampling factor M, i.e., $\gamma=sqrt(M)$. This power-boost causes the upper-layer signal $\gamma x_U^M$ to have unit-power.

The benefit of this approach is that the LDM compound signal can be carried on a very long OFDM signal with e.g. 32k FFT, such that the lower layer can utilize every subcarrier, thus being highly spectral efficient, whereas the upper layer utilizes every M-th subcarrier only, thus being highly robust against Doppler spread. It should be understood that the transmitted signal is provided for two types of receivers: i) a stationary receiver, which does not suffer from high Doppler spread and hence benefits from a long FFT length, and ii) a mobile receiver, which experiences high Doppler spread and thus benefits from the virtually increased subcarrier spacing on the upper layer.

The LDM combiner (100) is followed by an interleaver stage (200), which is specifically adapted for preserving the spectral distance between superimposed cells. To this end, the interleaving stage (200) comprises two branches, namely a first branch (the upper branch in Fig. 5) for processing superimposed cells and a second branch (the lower branch in Fig. 5) for processing non-superimposed cells. A demultiplexer, which may be implemented as a uniform M-fold down-sampling unit (210) and a non-uniform periodic M-fold down-sampling unit (211), extracts every M-th cell from the output of the LDM combiner for the first branch and every other cell for the second branch. Each output branch of the demultiplexer (210, 211) has both a dedicated time interleaver (220, 221) and a dedicated frequency interleaver (230, 231) for interleaving the respective sequence of superimposed and non-superimposed cells independently of each other in time and frequency direction.

The interleaving units 220, 221, 230, and 231 in Fig. 5 may be implemented independently of each other and may operate on different blocks (or "chunks") of cells. Specifically, the time interleaving units 220 and 221 may by configured for applying a first kind of interleaving, such as row-column interleaving, whereas the frequency interleaving units may be configured for applying a different, second kind of interleaving, such as pseudo-random interleaving, or vice versa. Further, each interleaving unit may operate on blocks with block size different from the block size of another interleaving unit. This difference may relate to time and frequency interleaving, as well as to the upper and the lower layer. The lower layer may, for instance, comprise a row-column interleaver with more columns and/or rows than a row-column interleaver of the upper layer, and vice versa. On the other hand, the frequency interleaver of the upper layer may operate on a block of cells that is smaller than the block of cells on which the corresponding time interleaver is operating, or vice versa. The same holds true for the time and frequency interleaver of the lower layer. Additional details of the time and frequency interleavers will be discussed below.

Further, in the embodiment of Fig. 5 there are two independent interleaving units in each of the upper and the lower branch. However, depending on circumstances, more (e.g. three or four or more independent interleaving units) or less (e.g. only a single interleaving unit) may be implemented in either the upper, the lower or in both branches.

Further, the configuration of the interleaving stages in each of the upper branch and the lower branch may be dynamically varied, e.g., depending on the propagation scenario, the channel properties or the data to be transmitted, including bit error rate, number of PLPs, number of LDM layers, QoS requirements, modulation, data rate, etc. Specifically, characteristic parameters of the frequency and/or time interleavers such as number of columns/rows of a row-column interleaver and the length of pseudo-random interleaver may be adapted. Parameters characterizing the interleaving carried out may then be signaled to the receiver, as will be discussed below.

Referring back to Fig. 5, both the upper and the lower branches are merged again by means of a multiplexer, generating the interleaved compound signal that forms the output of the interleaving stage. The multiplexer may be implemented as a uniform M-fold up-sampling unit (240) and a non-uniform periodic M-fold up-sampling unit (241) in combination with a signal adder (250) for adding the two up-sampled signals with the appropriate phase relationship. The operation of the uniform M-fold up-sampling unit (240) may be basically identical to that of up-sampling unit (160) of the LDM combiner. Other implementations for the demultiplexer and the multiplexer are conceivable, including clocked switches and buffers.

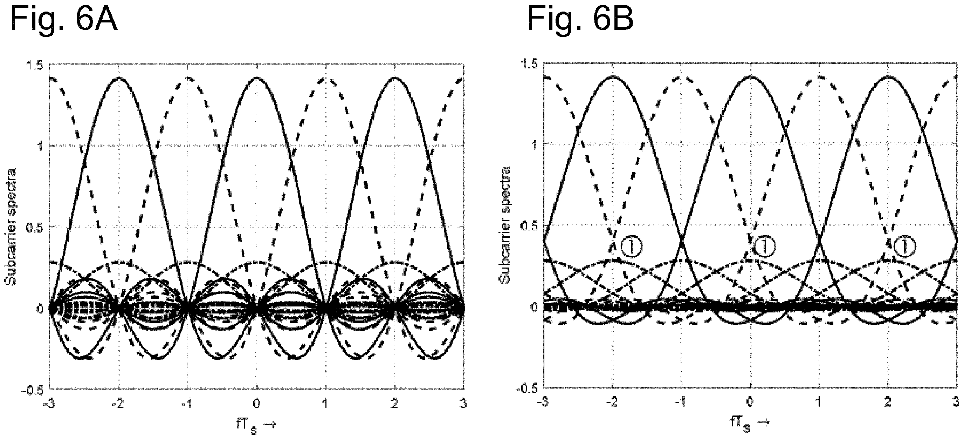

Fig. 6A is a spectrum diagram which illustrates a transmitted OFDM symbol with an LDM compound signal according to an embodiment of the present invention. Fig. 6A is similar to Fig. 4A, except that data of the upper layer (solid lines) is modulated on even subcarriers only (M = 2), whereas data of the lower layer (dash-dotted lines) is modulated on all subcarriers. The spectral energy of odd subcarriers of the conventional compound signal of Fig. 4A is represented, for illustrative purposes only, by dashed lines. This signal component is absent in the LDM compound signal of the present invention.

Fig. 6B is a spectrum diagram which illustrates the OFDM symbol of Fig. 6A as they are received over a time-varying channel. Fig. 6B is similar to Fig. 4B, except that data of the upper layer (solid lines) is modulated on even subcarriers only (M = 2), whereas data of the lower layer (dash-dotted lines) is modulated on all subcarriers. As in Fig. 6A, the spectral energy of odd subcarriers of the conventional compound signal is represented, for illustrative purposes only, by dashed lines. This signal component is absent in the LDM compound signal of the present invention. As can be seen from Fig. 6B, and in particular from a comparison of Fig. 6B and 4B, the inter-carrier interference from neighboring subcarriers is significantly reduced (①), as compared to the conventional LDM compound signal.

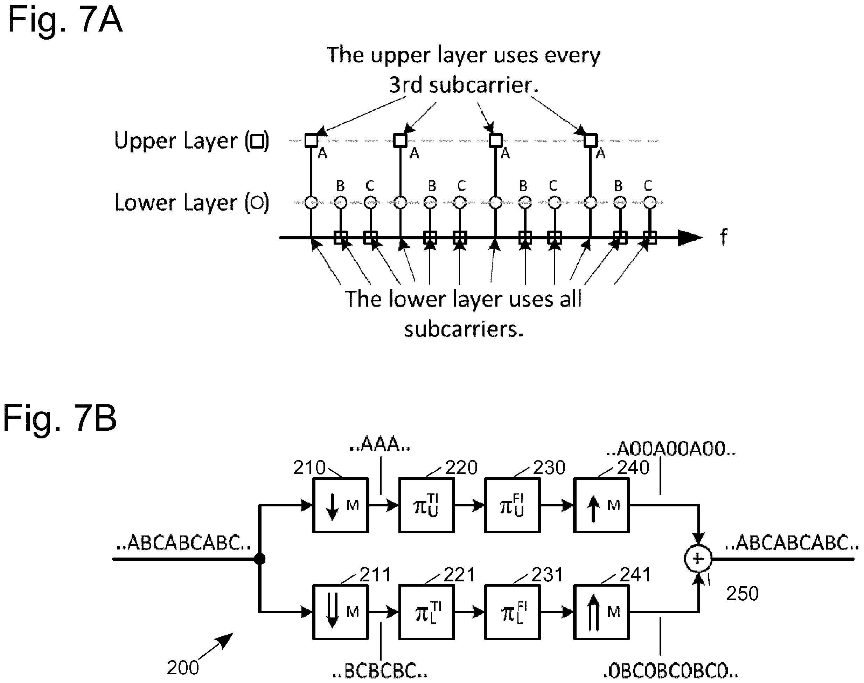

The operation of the interleaving stage (200) of Fig. 5 explained with reference to Figs. 7A and 7B.

Fig. 7A is a schematic representation of a sequence of LDM compound cells output by an LDM combiner with upper-layer up-sampling. The up-sampling factor M is 3, hence, every third subcarrier carries cells from both upper and lower layer (superimposed cells marked by an 'A') and all remaining subcarriers carry cells from only the lower layer (non-superimposed cells marked by 'B' and 'C').

Fig. 7B is a schematic representation of the interleaving stage operating on the cell sequence of Fig. 7A. The main purpose of the interleaving stage is to partition superimposed cells (marked 'A') and non-superimposed (marked 'B' and 'C') into two separate streams of cells, to interleave these two cell streams independently, and to merge the two interleaved streams into a single cell stream which is then passed on to the framing and OFDM blocks.

In the following, the particular embodiment shown in Fig. 7B is described which allows the realization of this concept.

The interleaving stage in Fig. 7B is receiving the cell sequence ABCABC etc. from the LDM combiner. The cells in the upper branch are passed through a uniform M-fold down-sampler (this is the dual operation to the M-fold up sampler in the LDM combiner) which retains every M-th cells and presents only superimposed cells (marked 'A') at its output. Those cells are then time-interleaved and frequency-interleaved; the time interleaver $\pi_U^{TI}$ and frequency inter-leaver $\pi_U^{FI}$ are specific to the upper branch and not necessarily the same as their counterpart in the lower branch. The interleaved cells are then again up-sampled uniformly by a factor M.

The cells on the lower branch are passed through a non-uniform, but periodic M-fold down sampler (shown as the block ⇓M) which suppresses every M-th cell and presents the cell sequence 'BCBC' etc. at its output. It should be emphasized that the uniform down-sampler keeps every M-th sample, while the non-uniform periodic down-sampler suppresses every M-th sample. The data rate at the output of the non-uniform periodic down-sampler is thus reduced by a factor of M/(M-1).

Next the cells are time-interleaved and frequency-interleaved; the time interleaver $\pi_L^{TI}$ and frequency interleaver $\pi_L^{FI}$ are specific to the lower branch and not necessarily the same as their counterparts in the lower branch. The interleaved cells in the lower branch are then again periodically and non-uniformly up-sampled by a factor M and an offset of one sample to position non-zero cells over zeros in-between the two branches. This is taken care of by the block marked with the double up-arrow (⇑M) which inserts a zero between every (M-1) cells.

Examples for particular time interleavers and frequency interleaver can be found in ETSI EN 302 755, "Digital Video Broadcasting (DVB); Frame structure channel coding and modulation for a second generation digital terrestrial television broadcasting system (DVB-T2)", v1.4.1, Feb. 2015, e.g., row-column block time interleavers and even-odd frequency interleavers and variations thereof for FFT-length up to $2^{15}$=32K subcarriers.

As a final step of the interleaving stage, the two branches are superimposed once again. Unlike the first superposition in the LDM combiner, here every non-zero cell from every layer meets with a zero from the respective other layer.

The operation of the interleaving stage is thus equivalent to applying a permutation to a block of compound cells such that the subset of superimposed cells 'A' is mapped onto itself. In other words, each superimposed cell is mapped to a position of another superimposed cell. Non-superimposed cells 'B' and 'C' are mapped to arbitrary positions in-between the superimposed cells. Interleaving in this manner preserves the spectral distance between superimposed cells.

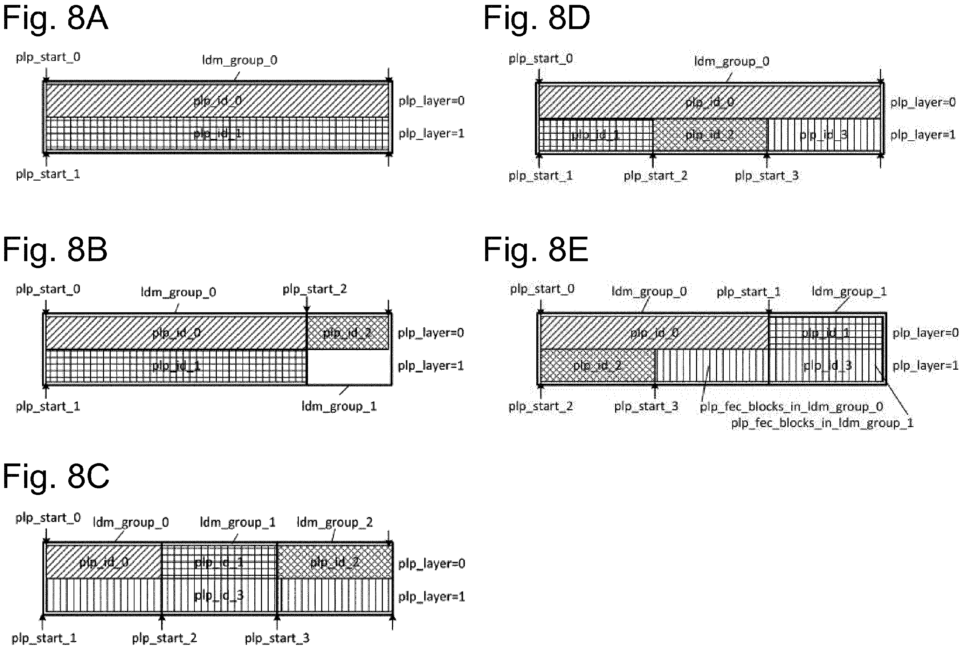

LDM has been discussed in terms of a single PLP on the upper and the lower layer. In the following, the general case of multiple PLPs on both layers in connection with LDM will be considered in conjunction with Figs. 8A-E.

In ATSC 3.0, a concept called time interleaver group (TI-group) was introduced to handle this general case. A TI-group is represented by a core layer PLP and it consists of a core layer PLP and all enhanced layer PLPs which are layered-division multiplexed with the core layer PLP. A TI-group identifier is implicitly given by the position of the core layer PLP in the control signaling.

The L1-signaling in ATSC 3.0 provides a receiver with a PLP's start address, the number of cells allocated to the PLP in a frame, and its location on either the core or the enhanced layer. Hence, a receiver is required to derive itself to which TI-group it belongs potentially by lining up the points of time covered by a PLP and then relate itself which enhanced PLP belongs to which core layer PLP in order to perform SIC for detection.

Here, the target is to define a generic form of L1-signaling to uniquely and explicitly inform the receiver about the chosen LDM-and interleaving-parameters. To this end, the definition of an LDM-group is introduced as a group of PLPs consisting of a single core layer PLP and one or more enhanced PLPs, which are layered-division multiplexed with the core layer PLP. The idea is to associate a PLP with a particular LDM-group identifier and then use the LDM-group identifier to subsume all LDM-and interleaving parameters in a single unique place within the control signaling.

Before describing a particular solution for the L1-signaling it is instructive to understand that the presence of multiple PLPs on both layers may lead to a variety of different alignments of the FEC-blocks contained in an LDM-group. Five FEC-blocks alignments are discussed next to illustrate the concept from the most simple to the most complex.

In Fig. 8A, the simplest configuration appears, in which one core PLP and one enhanced PLP form a single LDM-group. In addition, the PLPs are completely overlapping. There are two underlying assumptions, here: 1) The core layer (plp_id_0) and the enhanced layer carry a certain number of FEC-blocks, which - depending on the modulation order - are not necessarily the same. 2) The core layer is presented already in its state *after* M-fold up-sampling.

In Fig. 8B, an additional PLP (plp_id_2) joins the pair. One core PLP (pld_id_0) and one enhanced PLP (ldm_group_1) form a first LDM-group (ldm_group_0) and a single PLP (plp_id_2) on the core layer forms a second LDM-group (ldm_group_1).

The following configurations differ from the former two by introducing PLPs which are overlapping while residing on different LDM-layers. In Fig. 8C, three PLPs are present on the core layer and a single PLP on the enhanced layer. Following the rationale of ATSC 3.0, the core layer determines the interleaving and the affected PLP on the enhanced layer follows suit. Hence, the core layer splits the enhanced layer into three LDM-groups (ldm_group_0, ldm_group_1, ldm_group_2).

The reverse situation occurs in Fig. 8D, where a single PLP (plp_id_0) is present on the core layer and extends over three PLPs (plp_id_1, plp_id_2, and plp_id_3) on the enhanced layer. In contrast to the previous case, but again following the rationale of ATSC 3.0, a single LDM-group (ldm_group_0) is formed.

The most complex case is depicted in Fig. 8E. There are four PLPs in total, two on each the core and the enhanced layer, however, the fourth PLP (plp_id_3) overlaps with two core PLPs plp_id_0 and plp_id_1. It thus is split between two LDM groups, ldm_group_0 and ldm_group_1. The number of FEC-blocks falling into each core layer PLP is signalled as plp_fec_blocks_in_ldm_groups, and the number of core layers to which an enhanced layer PLP belongs is signalled as num_plp_in_ldm_groups.

A preferred embodiment for the time interleaving is row-column block interleaving as employed in DVB-T2. Choice and design of the time-interleavers will be discussed using the following nomenclature:

$N_{cells}^{u}$      Number of cells per FEC-block for the upper layer

$N_{FEC\_TI}^{u}$      Number of FEC-blocks per TI-Block on the upper layer

$N_{cells}^{l}(i)$      Number of cells per FEC-block for the lower layer and the i-th PLP

$N_{FEC\_TI}^{l}(i)$      Number of FEC-blocks per TI-Block on the lower layer and the i-th PLP

An essential constraint is the following:

$$M \cdot N_{cells}^{u} \cdot N_{FEC\_TI}^{u} = \sum_{i} N_{cells}^{l}(i) \cdot N_{FEC\_TI}^{l}(i) \qquad (1)$$

meaning that within an LDM-group the number of cells on the upper layer after up-sampling (on the left hand side) must equal the number of cells on the lower layer (on the right hand side). The sum takes into account those FEC-block alignments in which a core layer PLP extends over multiple enhanced layer PLPs (cf. Figs. 8D and 8E).

The number of cells entering the time-interleaver $\pi_{U}^{TI}$ on the upper branch is

$$N_{cells}^{u} \cdot N_{FEC\_TI}^{u}$$

which is an integer and a block-interleaver is easily realized. No issue there. However, the number of cells for the time-interleaver $\pi_{L}^{TI}$ on the *lower branch* is

$$N_{cells}^u \cdot N_{FEC\_TI}^u (M - 1) = \left(1 - \frac{1}{M}\right) \sum_i N_{cells}^l(i) \cdot N_{FEC\_TI}^l(i)$$

with M being the up-sampling factor.

Conceptually, the down-sampling on the lower branch is best thought of as a puncturing process, i.e., before time-interleaving a FEC-block is actually shortened from a FEC-block with $N_{cells}^l(i)$ cells to a FEC-block with $N_{cells}^l(i) \cdot \left(1 - \frac{1}{M}\right)$ cells.

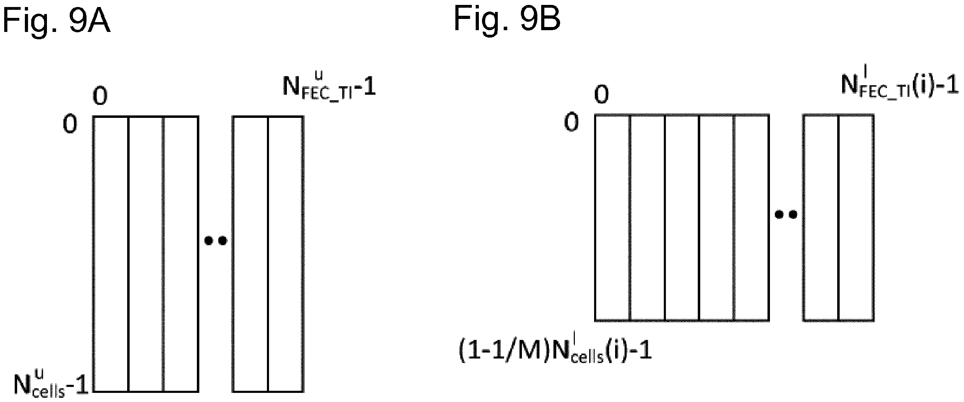

Figs. 9A and 9B illustrate the layout for the time interleavers $\pi_U^{TI}$ and $\pi_L^{TI}$ (for a single PLP on the lower layer), respectively, in accordance with the above considerations.

The term $\left(1 - \frac{1}{M}\right)$ is potentially troublesome as it may yield a non-integer number. Fortunately, for long FEC-codes with 64800 code bits this is not the case since the puncturing yields an integer number of samples for all QAM-constellations up to 4096-QAM and up to down-sampling factors M=6. However, for short FEC codes with 16200 code bits, cases exists, in which a non-integer number of samples arises, i.e.,

- 256QAM and M=2,
- 16QAM and M=4,
- 256QAM and M=4,
- 256QAM and M=6.

Since the enhanced/lower layer usually carries high-rate services with long LPDC codeword's, these can be considered corner cases. A possible solution, which also covers these corner cases, is to combine a couple of FEC-blocks to form a super-FEC-block before passing them through the interleaver. Conceptually, this is achieved by allowing the time-interleaver to have a variable number of rows in addition to a variable number of columns.

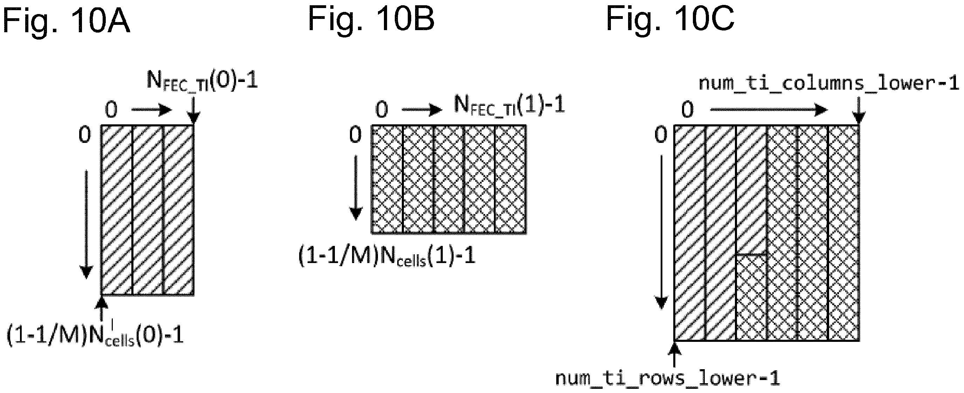

The same approach of allowing a time-interleaver layout with completely variable number of columns and rows also facilitates the situation in which there are multiple enhanced PLPs per core layer PLP present. The time-interleaver layout in Fig. 9 reflects a one-on-one FEC-block alignment as, e.g., in Fig. 8A. Here, the choice of rows and columns for the TI is straightforward. The situation is different if there are multiple enhanced PLPs present as, e.g., in Figs. 8D and 8E. For simplicity, we assume two PLPs on the enhanced layer. They are illustrated in Figs. 10A and 10B. The two PLPs are jointly passed into a time-interleaver whose dimensions are generically signaled with num_ti_rows_lower and num_ti_columns_lower, cf. Fig. 10C).

A preferred embodiment for the frequency interleaving (FI) is the pseudo-random solution as employed in DVB-T2. According to DVB-T2, the parameters of the FI (such as sequence length for the frequency interleaver and the number data cells in an OFDM cell) are chosen implicitly based on the chosen FFT-length and pilot pattern. The FI in DVB-T2 is conceptually a part of the OFDM-modulation and applies to all subcarriers, not individual PLPs.

According to ETSI EN 302 755 v1.4.1, the permutation function H(p) for DVB-T2 is determined by the algorithm:

$$p = 0;$$

$$\text{for } (i = 0; \; i < M_{max}; \; i = i + 1)$$

$$\{ H(p) = (i \bmod 2).2^{N_r - 1} + \sum_{j=0}^{N_r - 2} R_i(j).2^j;$$

$$\text{if } (H(p) < N_{data}) \; p = p+1; \}$$

wherein values of $M_{max}$ for the frequency interleaver are given in the following table:

| FFT Size | $M_{max}$ |
|---|---|
| 1K | 1 024 |
| 2K | 2 048 |
| 4K | 4 096 |
| 8K | 8 192 |
| 16K | 16 384 |
| 32K | 32 768 |

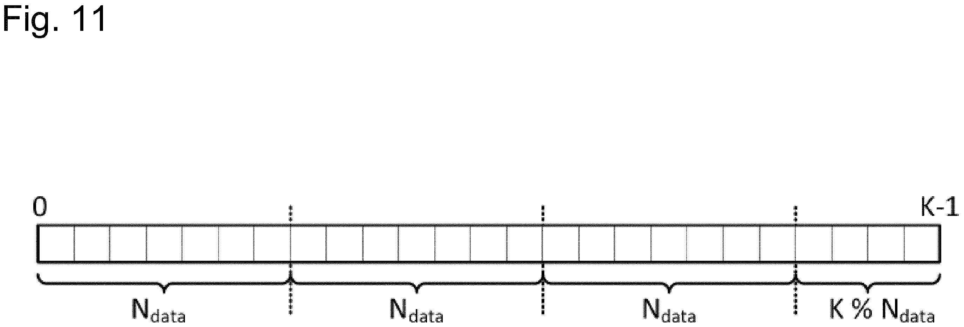

A frequency interleaver can span up to $N_{data} <= M_{max}$ cells. The time-interleaver will usually span more than $N_{data}$ cells, say K cells, i.e., $K >= N_{data}$. The integer K can assume the value $N_{cells}^{u} \cdot N_{FEC\_TI}^{u}$ for the upper interleaving branch and $N_{cells}^{u} \cdot N_{FEC\_TI}^{u}(M-1) = \left(1 - \frac{1}{M}\right) \sum_i N_{cells}^{l}(i) \cdot N_{FEC\_TI}^{l}(i)$ for the lower interleaving branch. An example is shown in Fig. 11.

The frequency interleaver will generally be applied to multiple blocks of cells at the time-interleaver output. There are floor($K/N_{data}$) blocks containing $N_{data}$ cells, followed by zero blocks or one trailing block containing $K\%N_{data}$ cells. It is understood that in the presence of a trailing block, which contains $K\%N_{data}$ cells, the if-clause in the above algorithm, namely if (H(p)<N_data) is changed to if (H(p)< K%N_data).

In contrast to DVB-T2, where the frequency interleaver applies to all subcarriers, in the present invention, the FI becomes part of an LDM-group and is thus signaled in the L1 configurable/L1-basisc part as num_mode_fi_upper and num_fi_mode_lower, thereby representing $M_{max}$ for each interleaving branch. Since $N_{data}$ can be chosen independently from the FFT-length, it is also signaled as part of the dynamic L1-signalling as num_fi_data_upper and num_fi_data_lower for the upper and lower interleaving branch, respectively.

Data is usually transmitted in frames which are partitioned into a preamble part and a payload part. The preamble carries so-called L1-signaling and consists of parameters, which are required by receivers to be able to demodulate the data carried in the payload. Examples of such parameters may be the employed FEC-code or modulation for a PLP.

Usually L1-signalling is divided into those parameters which are constant for several frames and those which are more dynamically changing, possibly between frames. In DVB-T2, L1-signalling is divided into L1-pre and L1-post, whereby the latter is again divided into a configurable and a dynamic part. And in ATSC 3.0, similarly, L1-signalling is carried in a basic and a dynamic part.

Potential configurable L1-signalling for the present invention is shown in Table 1. The number of PLPs is denoted by num_plp. The type of layer (core/upper or enhanced/lower) is denoted by plp_layer. An identifier called ldm_group_id is introduced to uniquely link PLPs on the lower layer to the respective upper layer PLP.

As an aside on time-interleaving modes it is noted that, in DVB-T2, there is the concept of intra-frame and inter-frame time-interleaving. Intra-frame time-interleaving allows to time-interleave multiple so-called TI-blocks (one TI-block comprises multiple FEC-blocks and corresponds to the one-time usage of the time-interleaver) within a single T2-frame, whereas inter-frame time-interleaving corresponds to the interleaving of a single TI-block over multiple TI-frames. Furthermore, in DVB-T2, the type of time interleaving (intra-frame or inter-frame interleaving) is signaled by the flag time_il_type and the number of TI-blocks is given by time_il_length.

In principle, the concept of intra/inter-frame interleaving is also applicable to LDM, which means that a core layer PLP determines the time-interleaving mode. This is hence signaled by the flags time_il_type and time_il_length in Table 1. One constraint must be adhered to in cases with overlapping PLPs as in Fig. 8E. Here, all core layer PLPs which carry parts of an enhanced layer PLP should employ the same time-interleaving mode. These constraints are, however, outside of the scope of this invention and must be arranged by a respective specification.

In case that there are multiple core PLPs per enhanced layer PLP, the number of core PLPs is signaled as num_plp_in_ldm_groups, followed by a list of LDM-group identifiers (ldm_group_id) signifying to which core layer PLPs the enhanced PLP is connected.

The total number of LDM-groups is denoted as num_ldm_groups. It is identical to the number of core layer PLPs. For each LDM-group, the up-sampling factor is signaled as plp_up_sampling_factor, the boost factor as plp_boost_factor, the injection level as plp_injection_level, and the maximum number of FEC-Blocks on the upper and lower layer as num_ti_columns_upper_max and num_ti_columns_lower_max, respectively.

**Table 1:** L1 -signalling as part of L1 -post configurable or L1 -Basic

| Syntax |
|---|
| ... |
| num_plp |
| ... |
| for i = 0 .. num_plp-1 { |
|     ... |
|     plp_layer |
|     if (plp_layer == 0) { |
|         ... |
|         ldm_group_id |
|         time_il_type |
|         time_il_length |
|         ... |
|     } else { |
|         num_plp_in_ldm_groups |
|         for i = 0 .. num_plp_in_ldm_groups-1 { |
|             ldm_group_id |
|         } |
|     } |
|     ... |
| } |
| ... |
| num_ldm_groups |
| for ldm_group_id = 0 .. num_ldm_groups -1 { |
|     plp_up_sampling_factor |
|     plp_boost_factor |
|     plp_injection_level |
|     num_ti_columns_upper_max |
|     num_ti_columns_lower_max |
|     num_fi_mode_upper |
|     num_fi_mode_lower |
| } |
| ... |

With reference to the constraint in Eq. (1), the number of FEC-blocks, $N_{FEC\_TI}^{u}$ and $N_{FEC\_TI}^{l}$ are signaled as part of the dynamic L1-signalling (seeTable 2). Since it is possible for an enhanced PLP to partake in multiple core layer PLPs, the number of FEC-blocks overlapping with each core layer PLP is signaled as plp_fec_blocks_in_ldm_group.

Additionally, for each LDM-group the LDM-group identifier ldm_group_id is signaled followed by the specific layout of the time-interleavers, $\pi_{U}^{TI}$ and $\boldsymbol{\pi_{L}^{TI}}$, i.e, their number of columns (num_ti_columns_upper, num_ti_columns_lower) and number of rows (num_ti_rows_upper, num_ti_nows_lower).

Finally, num_fi_mode_upper and num_fi_mode_lower signal the frequency interleaver mode ($M_{max}$) for the upper and lower layer.

Hence, a set of parameters that identify the particular LDM configuration may be signaled together with a set of parameters that identify the particular interleaver configuration. Both parameter sets may be logically linked by a common identifier, such as ldm_group_id. Other means for logical grouping or linking may be employed.

Tables 1 and 2 show an example embodiment for signaling both LDM- and interleaver-related parameters. However, the present invention is not limited to this particular embodiment and a different syntax may be employed, depending on circumstances. The syntax may, for instance, include additional parameters, exclude some of these parameters, or provide these parameters in an alternative order or logical grouping.

**Table 2:** L1-signalling as part of L1-post dynamic or L1-Detail

| Syntax |
|---|
| ... |
| for i = 0 .. num_plp-1 { |
|     ... |
|     plp_id |
|     plp_start |
|     if (plp_layer == 0) { |
|         plp_num_blocks |
|     } else { |
|         for i = 0 .. num_plp_in_ldm_groups-1 { |
|             plp_fec_blocks_in_ldm_group |
|         } |
|     } |
|     ... |
| } |
| ... |
| for i = 0 .. num_ldm_groups -1 { |
|     ldm_group_id |
|     num_ti_columns_upper |
|     num_ti_rows_upper |
|     num_ti_columns_lower |
|     num_ti_rows_lower |
|     num_fi_data_upper |
|     num_fi_data_lower |
| } |

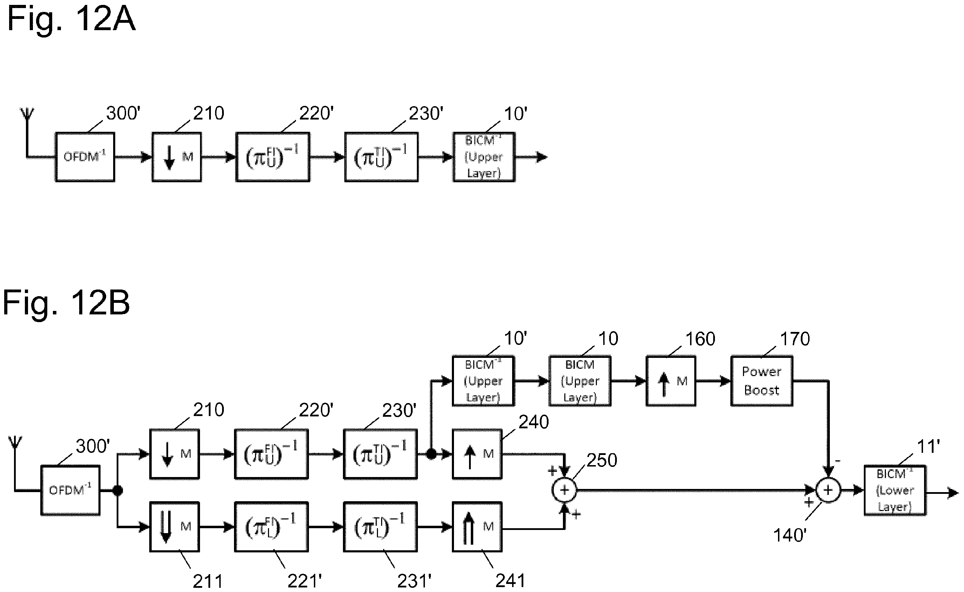

Fig. 12A is a schematic block diagram for a receiver, e.g., a mobile receiver that is configured for receiving the upper layer only. The receiver comprises an OFDM demodulator (300') for receiving a compound signal. The received compound signal is down-sampled by a factor M in down-sampling unit (210) to isolate the subcarriers that carry the upper layer data. The down-sampled signal is then deinterleaved in frequency deinterleaver (220') and time deinterleaver (230') and demodulated in demodulator (10') in order to retrieve the digital data of the upper layer. Frequency deinterleaver (220') and time deinterleaver (230') perform the inverse operation of frequency interleaver (220) and time interleaver (230), respectively, described in conjunction with Figs. 5 and 7, e.g., by applying a permutation that is the inverse of the permutation applied by the respective interleaver. Information on parameters that characterize the permutations to be applied may be taken from signaling information such as the L1-signaling described above.

Fig. 12B is a schematic block diagram for a receiver, e.g., a stationary receiver that is configured for receiving both the upper layer and the lower layer. The receiver of Fig. 12B comprises all components of the receiver of Fig. 12A, including the OFDM demodulator (300'), the down-sampling unit (210), the frequency and time interleavers (220', 230') and the demodulator (10') for retrieving the digital data of the upper layer.

The receiver of Fig. 12B is further provided with a branch for deinterleaving non-superimposed cells. To this end, cells of the received signal are effectively demultiplexed into superimposed cells and non-superimposed cells by means of down-sampling units 210 and 211, respectively. The superimposed cells are deinterleaved in the upper branch of Fig. 8B as described in conjunction with Fig. 8A. The non-superimposed cells are deinterleaved by means of frequency deinterleaver (221') and time deinterleaver (231') which perform the inverse operation of frequency interleaver (221) and time interleaver (231), respectively, described in conjunction with Figs. 5 and 7, e.g., by applying a permutation that is the inverse of the permutation applied by the respective interleaver. The deinterleaved cells of both branches are then re-multiplexed by means of two up-sampling units (240, 241) and a signal adder (250), as described above. The output of the signal adder (250) is the deinterleaved compound signal as it is received by the receiver.

In order to extract the lower layer data from the deinterleaved compound signal, a modulator (10) is provided for re-modulating the upper layer data, an up-sampling unit (160) for up-sampling the re-modulated signal, and an amplifier (170) for adjusting the power level of the up-sampled signal. The output signal of the amplifier (170) is then subtracted by means of signal subtractor (140') from the deinterleaved compound signal, thus providing the received compound signal free of the interference from the re-modulated upper layer signal, which is then demodulated in a second demodulator (11').

The present invention has been described in terms of specific embodiments that are not supposed to limit the scope of the appended claims. Various modifications can be made without departing from the scope of the appended claims.

For instance, the above embodiments relate to layered division multiplexing with two layers only. The present invention, however, can also be applied to three or more distinct layers. In this case, the up-sampling step may be applied to one or more of the upper-most layers. Cells of the respective layers may be subjected to dedicated interleavers by demultiplexing and re-multiplexing the compound signal accordingly. The upper-most layer may be up-sampled with an up-sampling factor that is equal to or greater than the up-sampling factor of the next lower layer.

Further, a reduction of the inter-carrier interference has been described in conjunction with two-fold up-sampling of the upper layer signal. The interleaving and deinterleaving stages have been described in conjunction with a three-fold up-sampling of the upper layer signal. However, any suitable up-sampling factor, such as $M = 2$, $M = 3$ or $M = 4$, etc., may be employed, depending on data rates, in order to further increase the spectral distance of subcarriers carrying the upper layer data and to further reduce inter-carrier interference.

Further, the present invention has been presented in the context of digital data broadcasting based on bit-interleaved coded modulation which includes specific forward error correcting codes (FECs), specific bit-interleavers, and specific symbol mappers. However, the present invention can likewise be applied to any other form of modulation that converts digital data into a modulated signal consisting of a sequence of complex-valued or real-valued cells.

Finally, although the present invention has been presented in the context of orthogonal frequency division multiplexing, it may also be applied to other forms of multi-carrier modulation.

Summarizing, the present invention relates to a technique for broadcasting digital data, and in particular to layered-division multiplexing (LDM) in connection with orthogonal frequency division multiplexing, wherein the upper layer data is modulated only on every M-th OFDM subcarrier in order to reduce inter-carrier interferences. The invention provides separate interleaving stages for LDM compound cells carrying cells of more than one layer and for LDM compound cells carrying cells of only one layer. In this manner, time- and frequency interleaving can be performed on an LDM compound signal while maintaining subcarrier spacing for compound cells carrying cells of more than one layer.

## Claims

1. A method for transmitting digital data, said method comprising the steps of
generating (10) a first modulated signal by modulating digital data of a first service;
generating (11) a second modulated signal by modulating digital data of a second service;
up-sampling (160) the first modulated signal by inserting (M-1) zeroes between every two consecutive samples of the first modulated signal, M being a positive integer greater than 1;
generating (140) a compound signal by adding the up-sampled signal and the second modulated signal;
interleaving (200) the compound signal by applying a permutation to a block of consecutive samples of the compound signal, said permutation being adapted such that a subset consisting of every M-th sample of the block is mapped onto itself, said subset of every M-th sample consisting of samples of the compound signal that are the sum of a sample of the first modulated signal and a sample of the second modulated signal; and

transmitting (300) the interleaved compound signal,

wherein the interleaving step further comprises

demultiplexing (210, 211) the compound signal into a first sequence of samples consisting of every M-th sample of the compound signal and into a second sequence of samples consisting of the samples of the compound signal that are not part of the first sequence of samples, the first sequence of samples consisting of the samples that are the sum of a sample of the first modulated signal and a sample of the second modulated signal;

applying a first interleaving process (220, 230) to the first sequence of samples;

applying a second interleaving process (221, 231) to the second sequence of samples; and

re-multiplexing (240, 241, 250) the interleaved first sequence of samples and the interleaved second sequence of samples to obtain the interleaved compound signal.

2.   The method of claim 1, wherein the first and/or the second interleaving process comprise a row-column interleaving process.

3.   The method of claim 1 or 2, wherein the first and/or the second interleaving process comprise a pseudo-random interleaving process.

4.   The method of any of claims 1 to 3, further comprising the step of signaling parameters of the first and/or the second interleaving process within an L1-signaling part of a respective data frame.

5.   The method of any of claim 1 to 4, further comprising the step of dividing the compound signal into frames of a predefined length, wherein data of each frame is transmitted simultaneously by means of orthogonal frequency division multiplexing, OFDM (300).

6.   The method of claim 5, wherein data of the first service is transmitted on every M-th OFDM subcarrier only.

7.   A method for receiving digital data, said method comprising the steps of receiving (300') a compound signal;

demultiplexing (210) a first sequence of samples from the received compound signal, said first sequence of samples consisting of every M-th sample of the compound signal, M being a positive integer greater than 1;

applying a first de-interleaving process (220', 230') to the first sequence of samples;

retrieving (10') digital data of a first service by demodulating the de-interleaved first sequence of samples;

demultiplexing (211) a second sequence of samples from the received compound signal, said second sequence of samples consisting of samples of the compound signal that are not part of the first sequence of samples;

applying a second de-interleaving process (221', 231') to the second sequence of samples;

re-multiplexing (240, 241, 250) the de-interleaved first sequence of samples and the de-interleaved second sequence of samples to obtain a de-interleaved compound signal;

generating (10) a re-modulated signal by modulating the retrieved digital data of the first service;

up-sampling (160) the re-modulated signal by the factor of M;

generating (140') a difference signal by subtracting the up-sampled signal from the deinterleaved compound signal; and

retrieving (11') digital data of a second service by demodulating the difference signal.

8.   The method of claim 7, further comprising the step of obtaining interleaving parameter information from an L1-signaling field in a frame header, wherein at least one of the first de-interleaving process (220', 230') and the second de-interleaving process (221', 231') is applied to the respective sequence of samples in accordance with the obtained interleaving parameter information.

9.   The method of claim 7 or 8, wherein the compound signal is received by decoding a sequence of OFDM symbols.

10.  The method of claim 9, wherein the first sequence of samples is demultiplexed from the received compound signal by keeping every M-th OFDM subcarrier only.

11.  A transmitter for transmitting digital data, said transmitter comprising

a first modulator (10) for generating a first modulated signal by modulating digital data of a first service;

a second modulator (11) for generating a second modulated signal by modulating digital data of a second service;

an up-sampling unit for up-sampling (160) the first modulated signal by inserting (M-1) zeroes between every two consecutive samples of the first modulated signal, M being a positive integer greater than 1;

a signal combiner (140) for generating a compound signal by adding the up-sampled signal and the second modulated signal;

an interleaver (200) for interleaving the compound signal by applying a permutation to a block of consecutive samples of the compound signal, said permutation being adapted such that a subset consisting of every M-th sample of the block is mapped onto itself, said subset of every M-th sample consisting of samples of the compound signal that are the sum of a sample of the first modulated signal and a sample of the second modulated signal; and

an output stage (300) for transmitting the compound signal,

wherein the interleaver (200) is further adapted for

demultiplexing (210, 211) the compound signal into a first sequence of samples consisting of every M-th sample of the compound signal and into a second sequence of samples consisting of the samples of the compound signal that are not part of the first sequence of samples, the first sequence of samples consisting of the samples that are the sum of a sample of the first modulated signal and a sample of the second modulated signal;

applying a first interleaving process (220, 230) to the first sequence of samples;

applying a second interleaving process (221, 231) to the second sequence of samples; and

re-multiplexing (240, 241, 250) the interleaved first sequence of samples and the interleaved second sequence of samples to obtain the interleaved compound signal.

12. A receiver for receiving digital data, said receiver comprising

an input stage (300') for receiving a compound signal;

a demultiplexer (210) for demultiplexing a first sequence of samples from the received compound signal, said first sequence of samples consisting of every M-th sample of the compound signal, M being a positive integer greater than 1;

a first de-interleaver for applying a first de-interleaving process (220', 230') to the first sequence of samples; and

a first demodulator (10) for retrieving digital data of a first service by demodulating the de-interleaved first sequence of samples,

wherein the demultiplexer (210, 211) is further adapted for demultiplexing a second sequence of samples from the received compound signal, said second sequence of samples consisting of samples of the compound signal that are not part of the first sequence of samples; and

wherein said receiver further comprises:

a second interleaver for applying a second de-interleaving process (221', 231') to the second sequence of samples;

a multiplexer (240, 241, 250) for re-multiplexing the de-interleaved first sequence of samples and the de-interleaved second sequence of samples to obtain a de-interleaved compound signal;

a modulator (10) for generating a re-modulated signal by modulating the retrieved digital data of the first service;

an up-sampling unit (160) for up-sampling the re-modulated signal by the factor of M;

a signal subtractor (140') for generating a difference signal by subtracting the up-sampled signal from the de-interleaved compound signal; and

a second demodulator (11') for retrieving digital data of a second service by demodulating the difference signal.

**Patentansprüche**

1. Verfahren zum Senden von digitalen Daten, wobei das Verfahren die Schritte umfasst zum

Erzeugen (10) eines ersten modulierten Signals durch Modulieren von digitalen Daten eines ersten Dienstes;

Erzeugen (11) eines zweiten modulierten Signals durch Modulieren von digitalen Daten eines zweiten Dienstes;

Abtastratenerhöhung (160) des ersten modulierten Signals durch Einfügen von (M-1) Nullen zwischen jeweils zwei aufeinander folgenden Abtastwerten des ersten modulierten Signals, wobei M eine positive Ganzzahl größer als 1 ist;

Erzeugen (140) eines zusammengesetzten Signals durch Hinzufügen des abtastratenerhöhten Signals und des zweiten modulierten Signals;

Verschachteln (200) des zusammengesetzten Signals durch Anwenden einer Permutation auf einen Block von aufeinander folgenden Abtastwerten des zusammengesetzten Signals, wobei die Permutation so angepasst ist, dass eine Teilmenge bestehend aus jedem M-ten Abtastwert des Blocks sich selbst zugeordnet wird, wobei die Teilmenge von jedem M-ten Abtastwert aus Abtastwerten des zusammengesetzten Signals besteht, welche die Summe eines Abtastwerts des ersten modulierten Signals und eines Abtastwerts des zweiten modulierten Signals sind; und

Senden (300) des verschachtelten zusammengesetzten Signals,

wobei der Verschachtelungsschritt ferner umfasst

Demultiplexing (210, 211) des zusammengesetzten Signals in eine erste Sequenz von Abtastwerten bestehend aus jedem M-ten Abtastwert des zusammengesetzten Signals und in eine zweite Sequenz von Abtastwerten bestehend aus den Abtastwerten des zusammengesetzten Signals, die nicht Teil der ersten Sequenz von Abtastwerten sind, wobei die erste Sequenz von Abtastwerten aus den Abtastwerten besteht, welche die Summe eines Abtastwerts des ersten modulierten Signals und eines Abtastwerts des zweiten modulierten Signals sind;
Anwenden eines ersten Verschachtelungsprozesses (220, 230) auf die erste Sequenz von Abtastwerten;
Anwenden eines zweiten Verschachtelungsprozesses (221, 231) auf die zweite Sequenz von Abtastwerten; und
Remultiplexing (240, 241, 250) der verschachtelten ersten Sequenz von Abtastwerten und der verschachtelten zweiten Sequenz von Abtastwerten zum Erhalten des verschachtelten zusammengesetzten Signals.

2. Verfahren nach Anspruch 1, wobei erster und/oder zweiter Verschachtelungsprozess einen Reihen-Spalten-Verschachtelungsprozess umfassen.

3. Verfahren nach Anspruch 1 oder 2, wobei erster und/oder zweiter Verschachtelungsprozess einen Pseudo-Zufallsverschachtelungsprozess umfassen.

4. Verfahren nach einem der Ansprüche 1 bis 3, ferner umfassend den Schritt zur Signalgebung von Parametern des ersten und/oder zweiten Verschachtelungsprozesses in einem L1-Signalgebungsteil eines entsprechenden Datenframes.

5. Verfahren nach einem der Ansprüche 1 bis 4, ferner umfassend den Schritt zum Unterteilen des zusammengesetzten Signals in Frames einer vordefinierten Länge, wobei Daten von jedem Frame gleichzeitig durch Orthogonal Frequency Division Multiplexing (OFDM) (300) gesendet werden.

6. Verfahren nach Anspruch 5, wobei Daten des ersten Dienstes nur auf jedem M-ten OFDM-Hilfsträger gesendet werden.

7. Verfahren zum Empfangen von digitalen Daten, wobei das Verfahren die Schritte umfasst zum Empfangen (300') eines zusammengesetzten Signals;
Demultiplexing (210) einer ersten Sequenz von Abtastwerten vom empfangenen zusammengesetzten Signal, wobei die erste Sequenz von Abtastwerten aus jedem M-ten Abtastwert des zusammengesetzten Signals besteht, wobei M eine positive Ganzzahl größer als 1 ist;
Anwenden eines ersten Entschachtelungsprozesses (220', 230') auf die erste Sequenz von Abtastwerten;
Abrufen (10') von digitalen Daten eines ersten Dienstes durch Demodulieren der entschachtelten ersten Sequenz von Abtastwerten;
Demultiplexing (211) einer zweiten Sequenz von Abtastwerten vom empfangenen zusammengesetzten Signal, wobei die zweite Sequenz von Abtastwerten aus Abtastwerten des zusammengesetzten Signals besteht, die nicht Teil der ersten Sequenz von Abtastwerten sind;
Anwenden eines zweiten Entschachtelungsprozesses (221', 231') auf die zweite Sequenz von Abtastwerten;
Remultiplexing (240, 241, 250) der entschachtelten ersten Sequenz von Abtastwerten und der entschachtelten zweiten Sequenz von Abtastwerten zum Erhalten eines entschachtelten zusammengesetzten Signals;
Erzeugen (10) eines remodulierten Signals durch Modulieren der abgerufenen digitalen Daten des ersten Dienstes;
Abtastratenerhöhung (160) des remodulierten Signals um den Faktor M;
Erzeugen (140') eines Differenzsignals durch Abziehen des abtastratenerhöhten Signals vom entschachtelten zusammengesetzten Signal; und
Abrufen (11') von digitalen Daten eines zweiten Dienstes durch Demodulieren des Differenzsignals.

8. Verfahren nach Anspruch 7, ferner umfassend den Schritt zum Erhalten einer Verschachtelungsparameterinformation von einem L1-Signalgebungsfeld in einem Framekopf, wobei der erste Entschachtelungsprozess (220', 230') oder/und der zweite Entschachtelungsprozess (221', 231') auf die jeweilige Sequenz von Abtastwerten gemäß der erhaltenen Verschachtelungsparameterinformation angewendet werden.

9. Verfahren nach Anspruch 7 oder 8, wobei das zusammengesetzte Signal durch Entschlüsseln einer Sequenz von OFDM-Symbolen empfangen wird.

10. Verfahren nach Anspruch 9, wobei die erste Sequenz von Abtastwerten vom empfangenen zusammengesetzten Signal durch Behalten von nur jedem M-ten OFDM-Hilfsträger demultiplext wird.

11. Sender zum Senden von digitalen Daten, wobei der Sender umfasst

einen ersten Modulator (10) zum Erzeugen eines ersten modulierten Signals durch Modulieren von digitalen Daten eines ersten Dienstes;

einen zweiten Modulator (11) zum Erzeugen eines zweiten modulierten Signals durch Modulieren von digitalen Daten eines zweiten Dienstes;

eine Abtastratenerhöhungs-Einheit zur Abtastratenerhöhung (160) des ersten modulierten Signals durch Einfügen von (M-1) Nullen zwischen jeweils zwei aufeinander folgenden Abtastwerten des ersten modulierten Signals, wobei M eine positive Ganzzahl größer als 1 ist;

einen Signalkombinierer (140) zum Erzeugen eines zusammengesetzten Signals durch Hinzufügen des abtastratenerhöhten Signals und des zweiten modulierten Signals;

einen Verschachtler (200) zum Verschachteln des zusammengesetzten Signals durch Anwenden einer Permutation auf einen Block von aufeinander folgenden Abtastwerten des zusammengesetzten Signals, wobei die Permutation so angepasst ist, dass eine Teilmenge bestehend aus jedem M-ten Abtastwert des Blocks sich selbst zugeordnet wird, wobei die Teilmenge von jedem M-ten Abtastwert aus Abtastwerten des zusammengesetzten Signals besteht, welche die Summe eines Abtastwerts des ersten modulierten Signals und eines Abtastwerts des zweiten modulierten Signals sind; und

eine Ausgangsstufe (300) zum Senden des zusammengesetzten Signals, wobei der Verschachtler (200) ferner angepasst ist zum

Demultiplexing (210, 211) des zusammengesetzten Signals in eine erste Sequenz von Abtastwerten bestehend aus jedem M-ten Abtastwert des zusammengesetzten Signals und in eine zweite Sequenz von Abtastwerten bestehend aus den Abtastwerten des zusammengesetzten Signals, die nicht Teil der ersten Sequenz von Abtastwerten sind, wobei die erste Sequenz von Abtastwerten aus den Abtastwerten besteht, welche die Summe eines Abtastwerts des ersten modulierten Signals und eines Abtastwerts des zweiten modulierten Signals sind;

Anwenden eines ersten Verschachtelungsprozesses (220, 230) auf die erste Sequenz von Abtastwerten;

Anwenden eines zweiten Verschachtelungsprozesses (221, 231) auf die zweite Sequenz von Abtastwerten; und

Remultiplexing (240, 241, 250) der verschachtelten ersten Sequenz von Abtastwerten und der verschachtelten zweiten Sequenz von Abtastwerten zum Erhalten des verschachtelten zusammengesetzten Signals.

12. Empfänger zum Empfangen von digitalen Daten, wobei der Empfänger umfasst

eine Eingangsstufe (300') zum Empfangen eines zusammengesetzten Signals;

einen Demultiplexer (210) zum Demultiplexing einer ersten Sequenz von Abtastwerten vom empfangenen zusammengesetzten Signal, wobei die erste Sequenz von Abtastwerten aus jedem M-ten Abtastwert des zusammengesetzten Signals besteht, wobei M eine positive Ganzzahl größer als 1 ist;

einen ersten Entschachtler zum Anwenden eines ersten Entschachtelungsprozesses (220', 230') auf die erste Sequenz von Abtastwerten; und

einen ersten Demodulator (10) zum Abrufen von digitalen Daten eines ersten Dienstes durch Demodulieren der entschachtelten ersten Sequenz von Abtastwerten;

wobei der Demultiplexer (210, 211) ferner zum Demultiplexing einer zweiten Sequenz von Abtastwerten vom empfangenen zusammengesetzten Signal angepasst ist, wobei die zweite Sequenz von Abtastwerten aus Abtastwerten des zusammengesetzten Signals besteht, die nicht Teil der ersten Sequenz von Abtastwerten sind; und

wobei der Empfänger ferner umfasst:

einen zweiten Entschachtler zum Anwenden eines zweiten Entschachtelungsprozesses (221', 231') auf die zweite Sequenz von Abtastwerten;

einen Multiplexer (240, 241, 250) zum Remultiplexing der entschachtelten ersten Sequenz von Abtastwerten und der entschachtelten zweiten Sequenz von Abtastwerten zum Erhalten eines entschachtelten zusammengesetzten Signals;

einen Modulator (10) zum Erzeugen eines remodulierten Signals durch Modulieren der abgerufenen digitalen Daten des ersten Dienstes;

eine Abtastratenerhöhungseinheit (160) zur Abtastratenerhöhung des remodulierten Signals um den Faktor M;

einen Signalsubtrahierer (140) zum Erzeugen eines Differenzsignals durch Abziehen des abtastratenerhöhten Signals vom entschachtelten zusammengesetzten Signal; und

einen zweiten Demodulator (11') zum Abrufen von digitalen Daten eines zweiten Dienstes durch Demodulieren des Differenzsignals.

**Revendications**

1. Procédé de transmission de données numériques, ledit procédé comprenant les étapes suivantes
   la génération (10) d'un premier signal modulé par modulation de données numériques d'un premier service;
   la génération (11) d'un second signal modulé par modulation de données numériques d'un second service;
   le suréchantillonnage 160) du premier signal modulé en insérant (M-1) zéros entre chaque deux échantillons consécutifs du premier signal modulé, M étant un entier positif supérieur à 1;
   la génération (140) d'un signal composé en additionnant le signal suréchantillonné et le second signal modulé;
   l'entrelacement (200) du signal composé en appliquant une permutation à un bloc d'échantillons consécutifs du signal composé, ladite permutation étant conçue pour mapper sur lui-même un sous-ensemble constitué de chaque M-ème échantillon du bloc, ledit sous-ensemble de chaque M-ème échantillon constitué d'échantillons du signal composé qui sont la somme d'un échantillon du premier signal modulé et un échantillon du second signal modulé; et
   la transmission (300) du signal composé entrelacé, dans lequel l'étape d'entrelacement comprend en outre
   le démultiplexage (210, 211) du signal composé en une première séquence d'échantillons constituée de chaque M-ème échantillon du signal composé et en une seconde séquence d'échantillons constituée des échantillons du signal composé qui ne font pas partie de la première séquence d'échantillons, la première séquence d'échantillons constituée des échantillons qui sont la somme d'un échantillon du premier signal modulé et un échantillon du second signal modulé;
   l'application d'un premier processus d'entrelacement (220, 230) à la première séquence d'échantillons;
   l'application d'un second processus d'entrelacement (221, 231) à la seconde séquence d'échantillons; et
   le remultiplexage (240, 241, 250) de la première séquence d'échantillons entrelacée et de la seconde séquence d'échantillons entrelacée pour obtenir le signal composé entrelacé.

2. Procédé selon la revendication 1, dans lequel le premier et/ou le second procédé d'entrelacement comprennent un procédé d'entrelacement rangée-colonne.

3. Procédé selon les revendications 1 ou 2, dans lequel le premier et/ou le second procédé d'entrelacement comprennent un procédé d'entrelacement pseudo-aléatoire.

4. Procédé selon l'une quelconque des revendications 1 à 3, comprenant en outre l'étape consistant à signaler des paramètres du premier et/ou du second processus d'entrelacement dans une partie de signalisation L1 d'une trame de données respective.

5. Procédé selon l'une quelconque des revendications 1 à 4, comprenant en outre l'étape consistant à diviser le signal composé en trames d'une longueur prédéfinie, dans lequel les données de chaque trame sont transmises simultanément au moyen d'un multiplexage par répartition orthogonale de fréquence, OFDM (300).

6. Procédé selon la revendication 5, dans lequel les données du premier service sont transmises sur chaque M-ème sous-porteuse OFDM uniquement.

7. Procédé de réception de données numériques, ledit procédé comprenant les étapes consistant à recevoir (300') un signal composé;
   le démultiplexage (210) d'une première séquence d'échantillons à partir du signal composé reçu, ladite première séquence d'échantillons étant constituée de chaque M-ème échantillon du signal composé, M étant un entier positif supérieur à 1;
   l'application d'un premier processus de désentrelacement (220, 230) à la première séquence d'échantillons;
   la récupération (10') de données numériques d'un premier service par démodulation de la première séquence d'échantillons désentrelacée;
   le démultiplexage (211) d'une seconde séquence d'échantillons à partir du signal composé reçu, ladite seconde séquence d'échantillons étant constituée d'échantillons du signal composé qui ne font pas partie de la première séquence d'échantillons;
   l'application d'un second processus de désentrelacement (221', 231') à la seconde séquence d'échantillons;
   le remultiplexage (240, 241, 250) de la première séquence d'échantillons désentrelacée et de la seconde séquence d'échantillons désentrelacée pour obtenir le signal composé désentrelacé;
   la génération (10) d'un signal remodulé en modulant les données numériques récupérées du premier service;
   le suréchantillonnage (160) du signal remodulé par le facteur M;
   la génération (140') d'un signal différentiel en soustrayant le signal suréchantillonné du signal composé désentrelacé; et

la récupération (11') de données numériques d'un second service par démodulation du signal différentiel.

8. Procédé selon la revendication 7, comprenant en outre l'étape consistant à obtenir des informations de paramètre d'entrelacement à partir d'un champ de signalisation L1 dans un en-tête de trame, dans lequel au moins l'un du premier processus de désentrelacement (220', 230') et du second processus de désentrelacement (221', 231') est appliqué à la séquence respective des échantillons conformément aux informations obtenues des paramètres d'entrelacement.

9. Procédé selon les revendications 7 ou 8, dans lequel le signal composé est reçu en décodant une séquence de symboles OFDM.

10. Procédé selon la revendication 9, dans lequel la première séquence d'échantillons est démultiplexée à partir du signal composé reçu en ne conservant que chaque sous-porteuse M-ème OFDM.

11. Emetteur pour la transmission de données numériques, ledit émetteur comprenant
   un premier modulateur (10) pour générer un premier signal modulé par modulation de données numériques d'un premier service;
   un second modulateur (11) pour générer un second signal modulé en modulant les données numériques d'un second service;
   une unité de suréchantillonnage pour suréchantillonner (160) le premier signal modulé en insérant (M-1) zéros entre chaque deux échantillons consécutifs du premier signal modulé, M étant un entier positif supérieur à 1;
   un combineur de signaux (140) pour générer un signal composé en ajoutant le signal suréchantillonné et le second signal modulé;
   un entrelaceur (200) pour entrelacer le signal composé en appliquant une permutation à un bloc d'échantillons consécutifs du signal composé, ladite permutation étant conçue pour mapper sur lui-même un sous-ensemble constitué de chaque M-ème échantillon du bloc, ledit sous-ensemble de chaque M-ème échantillon constitué d'échantillons du signal composé qui sont la somme d'un échantillon du premier signal modulé et un échantillon du second signal modulé; et
   un étage de sortie (300) pour transmettre le signal composé, dans lequel l'entrelaceur (200) est en outre conçu pour le démultiplexage (210, 211) du signal composé en une première séquence d'échantillons constituée de chaque M-ème échantillon du signal composé et en une seconde séquence d'échantillons constituée des échantillons du signal composé qui ne font pas partie de la première séquence d'échantillons, la première séquence d'échantillons constituée des échantillons qui sont la somme d'un échantillon du premier signal modulé et un échantillon du second signal modulé;
   l'application d'un premier processus d'entrelacement (220, 230) à la première séquence d'échantillons;
   l'application d'un second processus d'entrelacement (221, 231) à la seconde séquence d'échantillons; et
   le remultiplexage (240, 241, 250) de la première séquence d'échantillons entrelacée et de la seconde séquence d'échantillons entrelacée pour obtenir le signal composé entrelacé.

12. Récepteur pour recevoir des données numériques, ledit récepteur comprenant un étage d'entrée (300') pour recevoir un signal composé:

   un démultiplexeur (210) pour démultiplexer une première séquence d'échantillons à partir du signal composé reçu, ladite première séquence d'échantillons étant constituée de chaque M-ème échantillon du signal composé, M étant un entier positif supérieur à 1;
   un premier désentrelaceur pour appliquer un premier procédé de désentrelacement (220', 230') à la première séquence d'échantillons; et
   un premier démodulateur (10) pour récupérer des données numériques d'un premier service en démodulant la première séquence d'échantillons désentrelacée,
   dans laquelle le démultiplexeur (210, 211) est en outre conçu pour démultiplexer une seconde séquence d'échantillons à partir du signal composé reçu, ladite seconde séquence d'échantillons consistant en des échantillons du signal composé qui ne font pas partie de la première séquence d'échantillons; et
   dans laquelle ledit récepteur comprend en outre:

   un second entrelaceur pour appliquer un second procédé de désentrelacement (221', 231') à la seconde séquence d'échantillons;
   un multiplexeur (240, 241, 250) pour re-multiplexer la première séquence d'échantillons désentrelacée et la seconde séquence d'échantillons désentrelacée pour obtenir un signal composé désentrelacé;

un modulateur (10) pour générer un signal remodulé en modulant les données numériques récupérées du premier service;

une unité de suréchantillonnage (160) pour suréchantillonner le signal remodulé par le facteur M;

un soustracteur de signal (140') pour générer un signal différentiel en soustrayant le signal suréchantillonné du signal composé désentrelacé; et

un second démodulateur (11') pour récupérer des données numériques d'un second service en démodulant le signal différentiel.

# Fig. 1

## Fig. 2A

## Fig. 2B

EP 3 382 922 B1

## Fig. 3

Fig. 4A

Fig. 4B

Fig. 5

Fig. 6A

Fig. 6B

EP 3 382 922 B1

# Fig. 7A

The upper layer uses every 3rd subcarrier.

Upper Layer (□)

Lower Layer (○)

The lower layer uses all subcarriers.

# Fig. 7B

EP 3 382 922 B1

## Fig. 8A

plp_start_0      ldm_group_0

plp_id_0     plp_layer=0

plp_id_1     plp_layer=1

plp_start_1

## Fig. 8B

plp_start_0    ldm_group_0    plp_start_2

plp_id_0    plp_id_2    plp_layer=0

plp_id_1    plp_layer=1

plp_start_1      ldm_group_1

## Fig. 8C

plp_start_0   ldm_group_0    ldm_group_1    ldm_group_2

plp_id_0   plp_id_1   plp_id_2   plp_layer=0

plp_id_3   plp_layer=1

plp_start_1     plp_start_2     plp_start_3

## Fig. 8D

plp_start_0      ldm_group_0

plp_id_0     plp_layer=0

plp_id_1   plp_id_2   plp_id_3   plp_layer=1

plp_start_1     plp_start_2     plp_start_3

## Fig. 8E

plp_start_0   ldm_group_0    plp_start_1    ldm_group_1

plp_id_0    plp_id_1    plp_layer=0

plp_id_2    plp_id_3    plp_layer=1

plp_start_2    plp_start_3   plp_fec_blocks_in_ldm_group_0

plp_fec_blocks_in_ldm_group_1

Fig. 9A

$$N_{FEC\_TI}^{u}-1$$

0

0

$$N_{cells}^{u}-1$$

Fig. 9B

$$N_{FEC\_TI}^{l}(i)-1$$

0

0

$$(1-1/M)N_{cells}^{l}(i)-1$$

EP 3 382 922 B1

30

# Fig. 10A

$N_{FEC\_TI}(0)-1$

$0 \longrightarrow$

$0$

$(1-1/M)N_{cells}(0)-1$

# Fig. 10B

$0 \longrightarrow N_{FEC\_TI}(1)-1$

$0$

$(1-1/M)N_{cells}(1)-1$

# Fig. 10C

num_ti_columns_lower-1

$0 \longrightarrow$

$0$

num_ti_rows_lower-1

EP 3 382 922 B1

Fig. 11

EP 3 382 922 B1

## Fig. 12A

## Fig. 12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 16195317 A
- WO 2011068505 A1
- US 2016294598 A1

**Non-patent literature cited in the description**

- **P. P. BERGMANS ; T. M. COVER.** Cooperative broadcasting. *IEEE Trans. Inf. Theory,* May 1974, vol. 20 (3), 317-324
- **S. I. PARK.** Low Complexity Layered Division Multiplexing for ATSC 3.0. *IEEE Transactions on Broadcasting,* March 2016, vol. 62 (1), 233-243
- **LIANG ZHANG et al.** Layered-Division-Multiplexing: Theory and Practice. *IEEE Transactions on Broadcasting,* March 2016, vol. 62
- **FEB. 2015.** Digital Video Broadcasting (DVB); Frame structure channel coding and modulation for a second generation digital terrestrial television broadcasting system (DVB-T2). *ETSI EN 302 755,* vol. 1.4.1